# EUROPÄISCHE PATENTSCHRIFT

(11) **EP 1 127 785 B1**
(45) Veröffentlichungstag und Bekanntmachung des Hinweises auf die Patenterteilung: **13.07.2005**
(21) Anmeldenummer: 01101328.1
(22) Anmeldetag: 22.01.2001
(51) Int. Cl.: B64C 1/00, B64F 5/00, B64C 1/06, B64C 3/20

(54) **Strukturbauteil, insbesondere für ein Flugzeug und Verfahren zur Herstellung eines Strukturbauteils**
Structural component, in particular for an aircraft and its manufacturing method
Elément structurel, en particulier pour aéronef et son procédé de fabrication

(30) Priorität: 22.02.2000 DE 10007995
(43) Veröffentlichungstag der Anmeldung: 29.08.2001
(73) Patentinhaber: Airbus Deutschland GmbH, 21129 Hamburg (DE)
(72) Erfinder: Brenneis, Hartmut, Dipl.-Ing., 21709 Düdenbüttel (DE); Zink, Walter, Dipl.-Ing., 28357 Bremen (DE)
(74) Vertreter: Hansmann, Dierk, Dipl.-Ing.

(56) Entgegenhaltungen:
- EP-A- 0 078 891
- DE-A- 3 632 288
- DE-C- 19 844 035
- US-A- 4 725 334
- US-A- 5 649 888

## Beschreibung

Die Erfindung betrifft ein Strukturbauteil, insbesondere für ein Flugzeug, welches aus mindestens einem Hautblech besteht und Versteifungselemente aufweist, die Versteifungselemente in Längsrichtung als Stringer und in Querrichtung als Aussteifungselemente ausgebildet sind und mit dem Hautblech ein einheitliches Bauteil bilden, welches mittels eines spanenden Verfahrens aus einem Halbzeug gefertigt wird.

Bei der derzeitigen Fertigung von großflächigen Strukturbauteilen, insbesondere Rumpfschalen für ein Flugzeug, werden Hautbleche bzw. Hautfelder mit Abmessungen von ca. 2,5 m x 10 m verwendet. Es wird für die Herstellung der Rumpfschale die maximal mögliche Größe verwendet, um die Anzahl der Längs- und Quernähte und damit das Gewicht des Flugzeugrumpfes zu minimieren. Die Minimierung des Strukturgewichtes spielt im Flugzeugbau bezüglich des Energiebedarfes und daher für die Wirtschaftlichkeit eines Flugzeuges eine wichtige Rolle. Eine Gewichtsminimierung bedingt eine strukturmechanische Optimierung und somit sind die Hautbleche je nach Beanspruchung unterschiedlich dick ausgeführt. Beispielsweise können Aufdickungen am Hautblech im Bereich der Stringeranbindung notwendig sein. Die unterschiedlichen Dickenbereiche des Hautbleches werden derzeit üblicherweise durch eine Blech/Blech-Vernietung oder Blech/Blech-Klebung oder mechanisches Fräsen oder durch Chemisch-Abtragen erzeugt. Das Chemisch-Abtragen eines Hautblechs erfolgt durch Maskieren der Bleche, Schneiden und partielles Entfernen der Maske und chemisches Abtragen der freigelegten Fläche. Zur Verstärkung des Hautblechs sind längsverlaufende Stringer vorgesehen. Diese Rumpfhaut-Stringerverbindung wird üblicherweise mittels Nieten oder Kleben hergestellt. Für den weiteren Verfahrensschritt - das Montieren der Spante - werden an Haut und Stringer Winkelelemente, sogenannte Clips, angenietet. Dieser recht aufwendige Fertigungsablauf zur Herstellung einer Rumpfschalenstruktur ist näher in den VDI-Fortschrittsberichten, Reihe 2: Fertigungstechnik Nr. 326 Dissertation 07/94 von Dipl.-Ing. Peter Heider "Lasergerechte Konstruktion und lasergerechte Fertigungsmittel zum Schweißen großformatiger Strukturbauteile", S. 3 bis 5 beschrieben.

In DE-C 198 44 035 ist ein Verfahren zum Herstellen von großformatigen Strukturbauteilen in Differentialbauweise sowie mögliche Bauweisen eines Strukturbauteils beschrieben, die das Verfahren Laserstrahlschweißen für das Aufbringen einer Versteifungstruktur auf das Hautfeld nutzen. Die in Flugzeuglängsrichtung verlaufenden Stringer werden auf das Hautfeld aufgeschweißt. Auch ist aus diesem Stand der Technik bekannt, Spante bzw. Spantelemente schweißgerecht auszubilden und somit das Strukturbauteil größtenteils als Schweißbauteil zu realisieren.
Die EP-A-0 078 891 zeigt ein Paneel, welches als eine Baukomponente für ein Flugzeugtragflügel vorgesehen ist. Das Paneel ist als ein Integralteil ausgebildet, welches längsverlaufende Verstärkungsrippen (Stringer) sowie rechtwinklig dazu verlaufende Verstärkungsrippen (Rippengurte) aufweist. Eine Variabilität hinsichtlich belastungsabhängiger Aussteifungselemente sowie die Möglichkeit der Anbindung von Spantelementen ist hier nicht vorgesehen.

Aufgabe der vorliegenden Erfindung ist es, ein Strukturbauteil als Baukomponente für Flugzeugrumpfschalen auszubilden, welches mit vereinfachten und wenig aufwendigen Fertigungsverfahren herstellbar ist und somit die Fertigungszeit und die Herstellkosten des Strukturbauteils optimiert werden.

Diese Aufgabe wird erfindungsgemäß mit den im Patentanspruch 1 angegebenen Maßnahmen gelöst.
Ein Verfahren zur Herstellung eines Strukturbauteils ist im Anspruch 4 angegeben.

Dabei ist insbesondere von Vorteil, daß die Herstellung des Strukturbauteils mit dem angegebenen Verfahren prozeßoptimiert wird und aufwendige Verfahren zum zusätzlichen Verstärken bzw. Abtragen der Blechdicke, um ein gewichtssparendes Strukturbauteil zu erzielen, nicht mehr notwendig sind. Mit der Nutzung des Hochgeschwindigkeitsfräsens sind einfache, aber detailreiche Strukturbauteile, insbesondere Schalenstrukturen zu realisieren. Auch ist durch Vermeidung von Fügestellen die Korrosionsgefahr gemindert. Eine Vervollständigung des Strukturbauteils und Möglichkeiten zur Lasteinleitung in die Struktur ist mit der Vorbereitung des Anfügens eines Spantelements erreicht.
Es kann die Teilevielfalt reduziert werden, was insbesondere im Produktionsablauf von Vorteil ist und den Aufwand für Disposition, Lagerlogistik, Vernetzung der Konstruktion, Fertigungsverfolgung und Qualitätssicherung vermindert.
Bei einer Bauteilauslegung sind nur wenige Teile zu ändern.

Weiterbildungen und vorteilhafte Ausgestaltungen sind in den Unteransprüchen 2 und 3 sowie 5 bis 9 angegeben.

Mit den Maßnahmen nach Anspruch 2 ist es beispielsweise möglich, daß die Haut durch Dickenstufungen dem jeweiligen Belastungsfall ohne großen Aufwand angepaßt wird.
Stringer können gemäß der Ausbildung nach Anspruch 3 individuelle Dickenabstufungen aufweisen. Die erfindungsgemäße Weiterbildung als Stegform mit möglichen Abstufungen ist mittels spanender Verfahren leicht erreichbar

Vorteilhafte Weiterbildungen des Verfahrens in den Unteransprüchen 5 bis 9 ermöglichen eine weitgehende Automatisierung des Fertigungsprozesses. Eine lastenoptimierte Bauteilgestaltung bzw. -auslegung kann durch eine Prozeßsteuerung einfach umgesetzt werden. Durch den Einsatz der Verfahren Hochgeschwindigkeitsfräsen und Laserstrahlschweißen mit einer hohen Schweißprozeßgeschwindigkeit ist eine vorteilhafte Kombination erreicht, die erheblich den Fertigungsaufwand senken kann.
In der Zeichnung ist ein Ausführungsbeispiel der Erfindung dargestellt. Es wird nachstehend anhand der Figuren näher beschrieben. In den Figuren sind gleiche Bauteile mit gleichen Bezugszeichen versehen.

Es zeigt:
- Fig. 1: ein erfindungsgemäßes Strukturbauteil in einer Perspektivdarstellung,
- Fig. 2: das Strukturbauteil gemäß Fig. 1 mit einem angefügten Spantelement und
- Fig. 3: eine Darstellung eines Ausschnitts einer mit derzeitigen Fügeverfahren hergestellten Rumpfschalenstruktur.

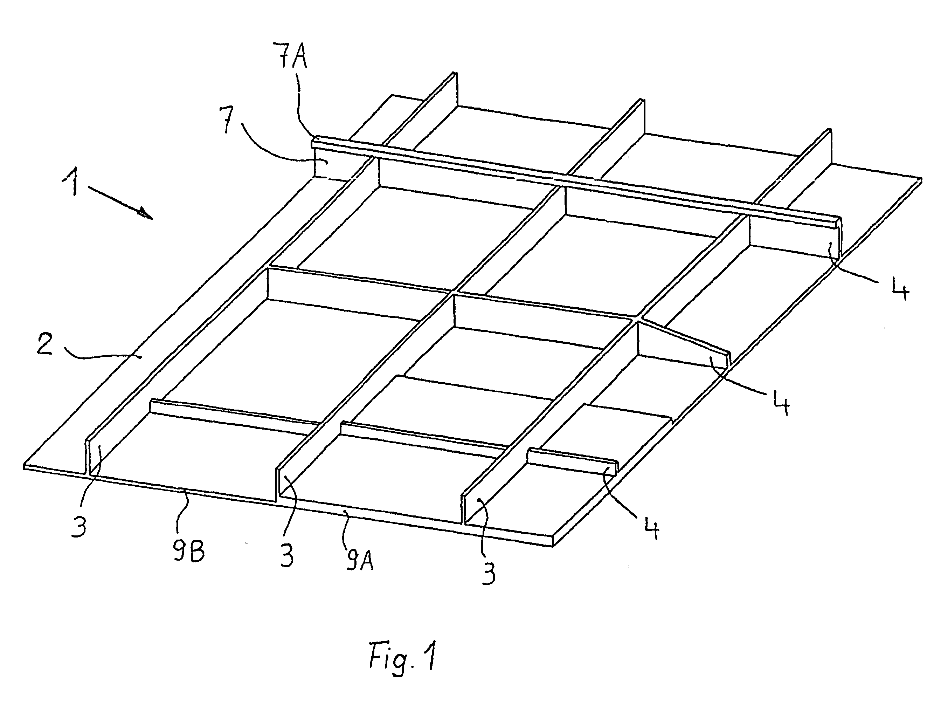

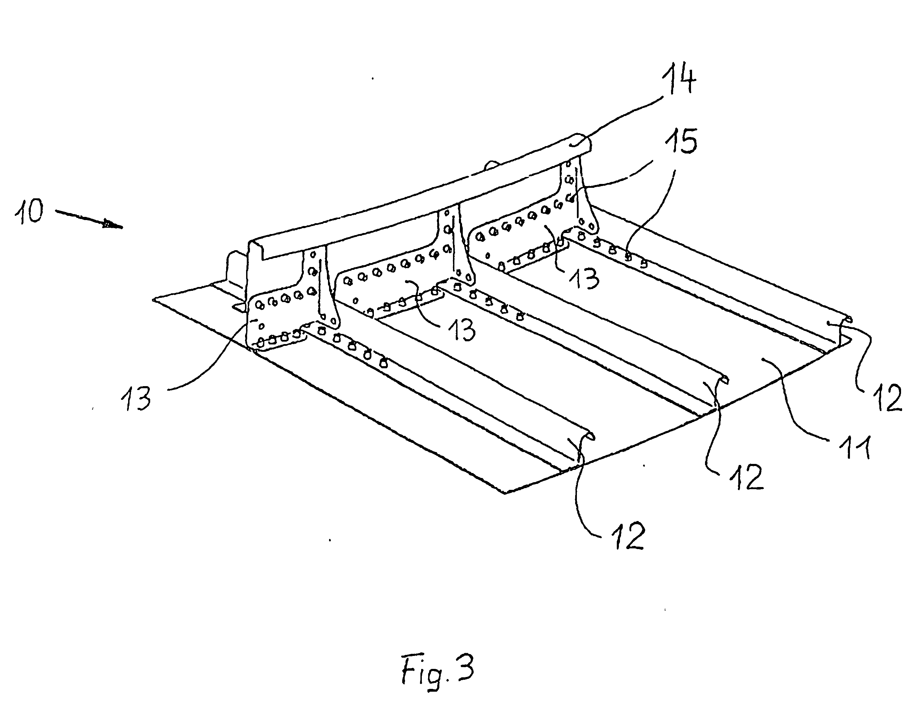

In Fig. 1 ist ein großflächiges Strukturbauteil 1 ersichtlich. Das Strukturbauteil 1 besteht im wesentlichen aus einem Hautfeld 2, auf dem längs- und querverlaufende Versteifungselemente 3 und 4 angeordnet sind. Vorgesehen ist, daß das Strukturbauteil 1 einteilig ausgebildet ist und mittels einer Hochgeschwindigkeitszerspanung aus einer vollen Platte gefräst wird. Die Abmaße eines solchen Halbzeuges können beispielsweise 10m x 2,5m x 35 mm betragen. Mit der Möglichkeit des Hochgeschwindigkeitsfräsens, welches durch eine deutliche Steigerung der Spindeldrehzahl sowie der Antriebsleistung gekennzeichnet ist, ist eine wesentlich höhere Zerspanungsleistung und damit eine Steigerung der Produktivität verbunden. Das Strukturbauteil 1 ist vorzugsweise für eine Verwendung als Flugzeugrumpfschale vorgesehen. Ein Bereich einer Flugzeugrumpfschale 10 nach dem bisherigen Stand der Technik zur Verdeutlichung des herkömmlichen Fertigungsprozesses ist in Fig. 3 dargestellt.
Mit dem erfindungsgemäßen Strukturbauteil 1 ist gegenüber der bekannten Lösung eine Verminderung von Herstellkosten und Fertigungsaufwand erreicht. Die längsverlaufenden, bei einer Anwendung für ein Flugzeug in Flugzeuglängsrichtung verlaufenden Versteifungselemente 3 sind als Stringer ausgebildet. Der Stringerabstand auf dem Hautfeld 2 kann minimiert werden, was es ermöglicht, schlankere Stringergeometrien anzuwenden und damit Gewichtsvorteile gegenüber eines herkömmlichen Strukturbauteils und eine Verbesserung der Rißstoppeigenschaften zu erreichen. Quer zu den Stringern 3 sind Aussteifungselemente 4 vorgesehen, die zur Versteifung des Strukturbauteils dienen und beispielsweise ermöglichen, daß die Stringerknicklänge reduziert werden kann und die akustischen Eigenschaften eines Hautfeldes verbessert werden.

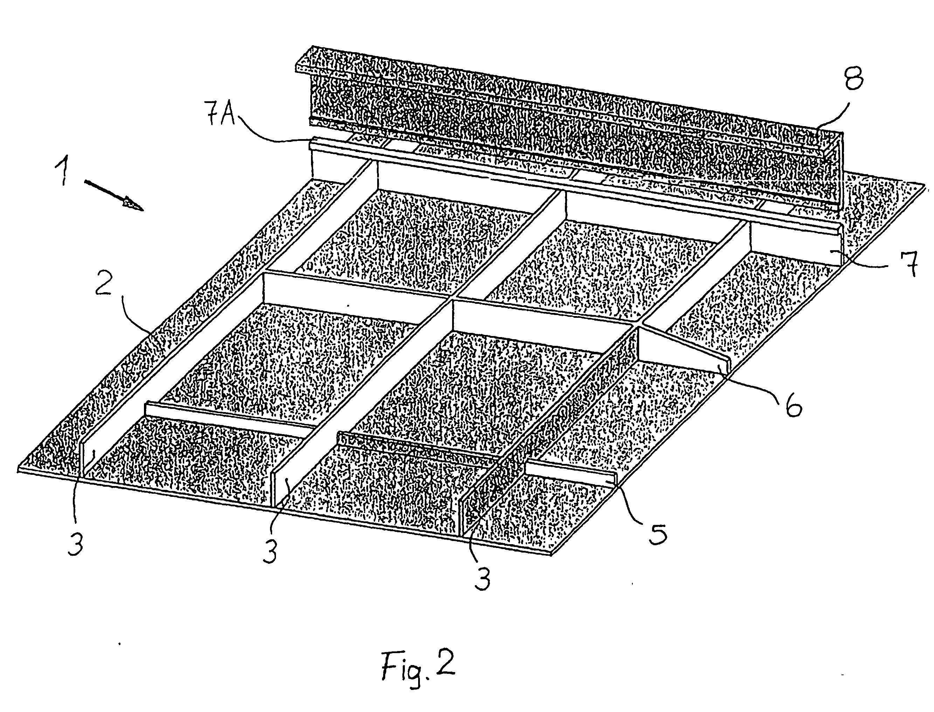

Die Aussteifungselemente 4 sind als Stegstützen 5 oder 6 ausgebildet, die unterschiedliche Steghöhen aufweisen können. So ist der Steg 5 mit einer geringen Steghöhe und der Steg 6 mit einer höheren Steghöhe ausgeführt, wobei eine belastungsabhängige Auslegung die Bauteilgeometrie bestimmt. Mit der Anwendung des Hochgeschwindigkeitsfräsens ist auch eine numerische Steuerung des Zerspanungsprozesses und eine weitgehend automatisch ablaufende Fertigung zur Bauteilherstellung möglich. Mit einer individuell dem Lastfall angepaßten Bauteilgeometrie können am Strukturbauteil 1 durch Verstärkungen 9A bzw. Abtragungen 9B im Hautfeld 2 und durch Dicken- und Höhenabstufungen der Versteifungselemente 3, 4, 5 und 6 Anpassungen bzw. Änderungen unaufwendig vorgenommen werden, die nach dem üblichen Herstellverfahren für Schalenbauteile 10 (siehe Fig. 3) nur mit einem großen Herstellaufwand und einer großen Teilevielfalt erreichbar wären.
Die durch die Auslegung definierte Bauteilgeometrie kann in einer bevorzugten Ausgestaltung rechnerunterstützt entstehen und die geometrischen Daten können für die Generierung des NC-Programmes für den Fertigungsprozeß genutzt werden, wenn möglich ebenfalls automatisiert. Eine Fertigung des Strukturbauteils 1 auf einer NCgesteuerten Fräsmaschine ist somit ohne einen Montageaufwand und ohne eine Vielzahl von Bauteilen realisierbar und die lastenoptimierte Bauteilgestaltung ist durch die Prozeßsteuerung einfach umsetzbar.
Als weiteres quer verlaufendes Aussteifungselement 4 ist ein Stantsteg 7 vorgesehen, der gleichzeitig eine Anschlußfläche 7A für ein anzufügendes Element aufweist. In der nachfolgenden Fig. 2 ist ersichtlich, daß ein Spantelement 8 auf den Spantsteg 7 aufgesetzt werden kann. Das Spantelement 8 kann bevorzugt als Strangpreßteil ausgebildet sein. Möglich ist aber auch, daß dieses Element ebenfalls durch einen Zerspanungsprozeß hergestellt ist, beispielsweise durch Fräsen aus einer vollen Platte. Als Fügeverbindung zwischen dem Spantsteg und dem Spantelement kann das bereits aus dem Stand der Technik bekannte Laserstrahlschweißen Anwendung finden.
Durch eine Kombination der Verfahren Hochgeschwindigkeitsfräsen und Laserstrahlschweißen ist es möglich, den Herstellungsprozeß für Strukturbauteile erheblich zu vereinfachen.

In Fig. 3 ist eine aus dem Stand der Technik bekannte Flugzeugrumpfschale 10 dargestellt. In dem gezeigten Ausschnitt sind die auf einem Hautfeld 11 aufgesetzten Stringer 12 ersichtlich. Die Stringer 12 können angenietet oder aufgeklebt werden. Vor dem Klebevorgang müssen alle Einzelteile eine spezielle Klebevorbehandlung erhalten. Sie werden entfettet, gereinigt, gebeizt, in Chromsäure anodisiert und anschließend geprimert. Das Kleben und Aushärten erfolgt unter Temperatur und Zeiteinfluß in einem Autoklaven. Danach müssen die Bauteile gereinigt und überflüssiger Klebstoff entfernt werden. Weiterhin müssen die Klebefugen gegen Korrosion geschützt werden, was mittels einer Dichtmittelraupe realisiert wird, die noch eine weitere Schutzschicht gegen aggressive Medien erhält.
Für den Nietvorgang ist es ebenfalls notwendig, eine recht aufwendige Bauteilvorbereitung zum Oberflächenschutz durchzuführen. Das Hautblech 11 und die Stringer 12 müssen anodisiert, grundiert, an den-Fügeflächen mit Aktivator gereinigt und mit Dichtmittel versehen werden. Dann erst kann der eigentliche Nietvorgang ausgeführt werden. Die Nieten sind beispielhaft mit dem Bezugszeichen 15 gekennzeichnet. Nach Herstellung der Rumpfhaut-Stringerverbindung werden Winkelelemente, sogenannte Clips 13 an die Stringer 12 und an das Hautfeld 11 angenietet. Bei diesen Nietvorgängen sind die bereits genannten aufwendigen Vorbereitungsmaßnahmen ebenfalls auszuführen. In einem weiteren Montagevorgang werden Spante in die Rumpfschale 10 eingebracht. Gezeigt ist ein Spant 14, der an die Winkelelemente 13 angenietet wird, wobei zumindest in bestimmten Bereichen der Rumpfunterschale ebenfalls die aufwendigen Vorbereitungsmaßnahmen und ein Einbringen von Dichtmittel notwendig sind.

## Patentansprüche

1. Strukturbauteil (1), insbesondere für ein Flugzeug, welches aus mindestens einem Hautblech (2) besteht und Versteifungselemente (3, 4) aufweist, die Versteifungselemente in Längsrichtung als Stringer (3) und in Querrichtung als Aussteifungselemente (4) ausgebildet sind und mit dem Hautblech (2) ein einheitliches Bauteil bilden, welches mittels eines spanenden Verfahrens aus einem Halbzeug gefertigt wird, **dadurch gekennzeichnet, dass** die Aussteifungselemente (4) Stegstützen (5, 6) bilden, die belastungsabhängig unterschiedliche Steghöhen aufweisen sowie weiterhin Spantstege (7) bilden, die jeweils mit einem unteren Stegteil mit einem Übergangsquerschnitt am Hautblech (2) anschließen und die obere Deckfläche des Spantsteges (7) als Anschlussfläche (7A) für ein Spantelement (8) größer ist als die Übergangsquerschnittsfläche sowie ein Spantelement (8) zur Vervollständigung eines Spantes an der Anschlussfläche (7A) angeordnet ist.

2. Strukturbauteil nach Anspruch 1,
**dadurch gekennzeichnet, dass**
das Hautblech (2) Verstärkungen (9A) und/oder Abtragungen (9B) aufweist.

3. Strukturbauteil nach einem der Ansprüche 1 oder 2,
**dadurch gekennzeichnet, dass**
die Stringer (3) stegförmig ausgebildet sind

4. Verfahren zur Herstellung eines Strukturbauteils (1), wobei aus einem als Platte ausgebildeten Halbzeug entsprechend der Auslegungsvorgaben des Strukturbauteils (1) ein Hautblech (2) mit längs und quer verlaufenden Versteifungselementen (3, 4) spanend gefertigt wird, **dadurch gekennzeichnet, dass** als Spanverfahren das Hochgeschwindigkeitsfräsen eingesetzt wird und während des Spanungsprozesses die längsverlaufenden Versteifungselemente (3, 4) Stringer (3) bilden und quer zur Stringerrichtung Stegstützen (5, 6) und/oder Spantstege (7) ausgebildet werden, wobei die Bauteilgeometrie in numerischer Form zur Steuerung des Zerspanungsprozesses abgerufen wird und durch Dicken- und Höhenabstufungen eine individuelle Anpassung der Versteifungselemente (3, 4) das Bauteil lastenoptimiert gestattet wird und weiterhin die geometrische Form des Spantsteges (7) gefräst wird, wobei die Fläche des Übergangsquerschnittes zwischen dem unteren Stegteil und dem Hautblech (2) kleiner als die obere Deckfläche als Anschlussfläche (7A) an ein Spantelement (8) ist und in einem weiteren Fertigungsschritt an die obere Deckfläche (7A) des Spantsteges (7) ein Spantelement (8) angefügt wird.

5. Verfahren nach Anspruch 4,
**dadurch gekennzeichnet, dass**
die Hochgeschwindigkeitsbearbeitung mit einer Großflächenfräsmaschine ausgeführt wird und der Spanprozeß über eine numerische Steuerung gesteuert wird.

6. Verfahren nach einem der Ansprüche 4 oder 5,
**dadurch gekennzeichnet, dass** wobei Verstärkungen (9A) und/oder Abtragungen (9B) im Hautfeld (2) während des Fräsvorganges gebildet werden.

7. Verfahren nach Anspruch 4,
**dadurch gekennzeichnet, dass**
das Spantelement (8) mittels Laserstrahlschweißen an die Spantstege (7) angefügt wird.

8. Verfahren nach einem der Ansprüche 4 oder 7,
**dadurch gekennzeichnet, dass**
das Spantelement (8) mit dem Verfahren Strangpressen hergestellt wird.

9. Verfahren nach einem der Ansprüche 4 oder 7,
**dadurch gekennzeichnet, dass**
das Spantelement (8) mit einem Zerspanungsprozeß aus einer vollen Platte hergestellt wird.

## Claims

1. Structural component (1), in particular for an aircraft, which consists of at least one skinplate (2) and has stiffening elements (3, 4), the stiffening elements are formed in the longitudinal direction as stringers (3) and in the transverse direction as brace elements (4) and with the skinplate (2) form a homogeneous component, which is fabricated by means of a metal-cutting process from a semi-finished product, **characterized in that** the brace elements (4) form web supports (5, 6), which have different web heights depending on the load and also form frame webs (7), which are connected respectively with a lower web part with a transitional cross-section to the skinplate (2) and the upper cover surface of the frame web (7) as a connecting surface (7A) for a frame element (8) is greater than the transitional cross-sectional area and a frame element (8) for completing a frame is arranged on the connecting surface (7A).

2. Structural component according to claim 1, **characterized in that** the skinplate (2) has reinforcements (9A) and/or erosions (9B).

3. Structural component according to one of claims 1 or 2, **characterized in that** the stringers (3) are formed web-shaped.

4. Method for manufacturing a structural component (1), a skinplate (2) with stiffening elements (3, 4) running longitudinally and transversely being manufactured by metal-cutting from a semi-finished product formed as a plate according to the design specifications of the structural component (1), **characterized in that** high-speed milling is used as a metal-cutting method and during the metal-cutting process the stiffening elements (3, 4) running longitudinally form stringers (3) and transversely to the stringer direction web supports (5, 6) and/or frame webs (7) are formed, the component geometry being retrieved in numerical form to control the machining process and through thickness and height gradations an individual adaptation of the stiffening elements (3, 4) the component being designed to be load-optimized and furthermore the geometrical shape of the web frame (7) being milled, the surface of the transitional cross-section between the lower web part and the skinplate (2) being smaller than the upper cover surface as connecting surface (7A) to a frame element (8) and in a further production step a frame element (8) being joined to the upper cover surface (7A) of the frame web (7).

5. Method according to claim 4, **characterized in that** the high-speed machining is carried out using a large-area milling machine and the cutting process is controlled via a numerical controller.

6. Method according to one of claims 4 or 5, **characterized in that** reinforcements (9A) and/or erosions (9B) are formed in the skin area (2) during the milling process.

7. Method according to claim 4, **characterized in that** the frame element (8) is joined by means of laser beam welding to the frame webs (7).

8. Method according to one of claims 4 or 7, **characterized in that** the frame element (8) is produced using the extrusion press method.

9. Method according to one of claims 4 or 7, **characterized in that** the frame element (8) is produced from a full plate using a machining process.

## Revendications

1. Elément structurel (1), notamment pour un avion, qui est formé d'au moins une tôle d'habillage (2) et présente des éléments de renforcement (3, 4), les éléments de renforcement étant conformés en lisses (3) dans la direction longitudinale et en éléments raidisseurs (4) dans la direction transversale et formant avec la tôle d'habillage (2) un élément de construction monobloc qui est fabriqué à partir d'un produit semi-fini par un procédé d'usinage à enlèvement de copeaux, **caractérisé par le fait que** les éléments raidisseurs (4) forment des cloisons-supports (5, 6), qui présentent des hauteurs différentes en fonction de la charge, ainsi que des cloisons-couples (7) qui sont liées à la tôle d'habillage (2) par une partie de cloison inférieure présentant une section de raccordement, que la surface de la face supérieure de la cloison-couple (7) en tant que surface de liaison (7A) pour un élément de membrure (8) est supérieure à la surface de la section de raccordement et qu'un élément de membrure (8) est disposé sur la surface de liaison (7A) pour compléter un couple.

2. Elément structurel selon la revendication 1, **caractérisé par le fait que** la tôle d'habillage (2) comporte des zones épaissies (9A) et/ou des zones amincies (9B).

3. Elément structurel selon une des revendications 1 ou 2, **caractérisé par le fait que** les lisses (3) sont conformées en cloisons.

4. Procédé de fabrication d'un élément structurel (1), une tôle d'habillage (2) avec des éléments de renforcement (3, 4) qui s'étendent dans la direction longitudinale et la direction transversale étant fabriquée par enlèvement de copeaux à partir d'un produit semi-fini en plaque, en fonction des exigences constructives de l'élément structurel (1), **caractérisé par le fait qu'**on utilise comme procédé d'usinage le fraisage à haute vitesse et que pendant l'opération d'usinage les éléments de renforcement (3, 4) longitudinaux forment les lisses (3) et les cloisons-supports (5, 6) et/ou les cloisons-membrures (7) sont formées transversalement à la direction des lisses, la géométrie de l'élément de construction étant utilisée sous la forme numérique pour contrôler le processus d'usinage, l'élément de construction étant optimisé du point de vue de la charge par une adaptation individuelle des éléments de renforcement (3, 4) par échelonnement des épaisseurs et des hauteurs, la forme géométrique de la cloison-couple (7) étant obtenue par fraisage, la surface de la section de raccordement entre la partie inférieure de la cloison et la tôle d'habillage (2) étant plus petite que la surface de la face supérieure qui constitue la surface de liaison (7A) d'un élément de membrure (8) et un élément de membrure (8) étant assemblé à la surface de couverture supérieure (7A) de la cloison de membrure au cours d'une étape de fabrication supplémentaire.

5. Procédé selon la revendication 4, **caractérisé par le fait que** l'usinage à haute vitesse est réalisé sur une fraiseuse à grand gabarit et que le processus d'usinage est contrôlé par une commande numérique.

6. Procédé selon une des revendications 4 ou 5, **caractérisé par le fait que** des zones épaissies (9A) et/ou des zones amincies (9B) sont formées dans la plaque d'habillage (2) au cours de l'opération de fraisage.

7. Procédé selon la revendication 4, **caractérisé par le fait que** l'élément de membrure (8) est assemblé avec les cloisons-couples (7) par soudage laser.

8. Procédé selon une des revendications 4 ou 7, **caractérisé par le fait que** l'élément de membrure (8) est fabriqué par un procédé d'extrusion.

9. Procédé selon une des revendications 4 ou 7, **caractérisé par le fait que** l'élément de membrure (8) est fabriqué par un procédé d'usinage par enlèvement de copeaux à partir d'une plaque pleine.
